# EUROPÄISCHE PATENTSCHRIFT

(11) **EP 0 662 928 B1**
(45) Veröffentlichungstag und Bekanntmachung des Hinweises auf die Patenterteilung: **24.07.1996**
(21) Anmeldenummer: 93920825.2
(22) Anmeldetag: 25.09.1993
(51) Int. Cl.: B65G 63/00

(54) **VERFAHREN ZUM KONTROLLIEREN DES UMSCHLAGENS VON LADEGUTEINHEITEN AUF EINEN BZW. VON EINEM ZUG UND EINRICHTUNG ZUR DURCHFÜHRUNG DES VERFAHRENS**
PROCESS FOR CONTROLLING THE TRANSFERENCE OF GOODS LOAD UNITS ON OR FROM A TRAIN AND DEVICE FOR IMPLEMENTING THE PROCESS
PROCEDE DE COMMANDE DE TRANSFERT D'UNITES DE CHARGEMENT SUR UN TRAIN OU A PARTIR D'UN TRAIN ET INSTALLATION POUR LA MISE EN OEUVRE DE CE PROCEDE

(30) Priorität: 01.10.1992 DE 4233007
(43) Veröffentlichungstag der Anmeldung: 19.07.1995
(73) Patentinhaber: Krupp Fördertechnik GmbH, D-47226 Duisburg (DE)
(72) Erfinder: ABEL, Burkhard, D-46244 Bottrop (DE); BIRKENFELD, Gerhard, D-44799 Bochum (DE); LÜCKING, Manfred, D-45277 Essen (DE); VOGT, Ulrich, P., D-45329 Essen (DE); ZIMEK, Dieter, D-45139 Essen (DE)
(86) Internationale Anmeldenummer: EP9302611
(87) Internationale Veröffentlichungsnummer: WO9407784

(56) Entgegenhaltungen:
- DE-A- 2 417 733
- DE-A- 4 005 538

## Beschreibung

Die Erfindung betrifft ein Verfahren zum Kontrollieren des Umschlagens von Ladeguteinheiten wie Containern, Wechselbehältern, Sattelaufliegern o.dgl. von einem bzw. auf einen langsam fahrenden, aus Tragwagen gebildeten Zug mittels Umschlag-Hebezeugen (sog. Rendezvous-Technik) sowie eine Einrichtung mit einem aus mindestens einem Gleis bestehenden Schienenweg, einem Lagerkomplex mit lagerinternem Transportsystem und Umschlag-Hebezeugen, die den Schienenweg und das lagerinterne Transportsystem erfassen, zur Durchführung des Verfahrens.

Ein Verfahren und eine Einrichtung der eingangs genannten Art sind bereits vorgeschlagen worden. Fährt ein Zug von einem Ort A zu einem Ort Z über die Orte B, C, ..., so werden in den Orten B, C, ... in der Regel jeweils nur ein Teil der Ladeguteinheiten entladen. An den freien oder dadurch freiwerdenden Tragkapazitäten der Tragwagen des Zuges können andere Ladeguteinheiten aufgenommen werden.

Beim Umschlag von bzw. auf bewegte Tragwagen treten naturgemäß - auch bei kleinen (Kriech-) Geschwindigkeiten - erhebliche Probleme auf, die Ladeeinheiten sicher und schnell zu erfassen bzw. abzusetzen. Wird von einem Abschnitt des Zuges nur ein kleiner steil des Ladeguteinheiten entladen, so kann der Zug in Anbetracht der Kapazität der Umschlag-Hebezeuge mit einer angemessenen Geschwindigkeit bewegt werden. Wird von dem folgenden Zugabschnitt dagegen ein großer Anteil von Ladeguteinheiten entladen, so muß der Zug wegen der verfügbaren Umschlagkapazität entsprechend langsam bewegt werden. Durch das hierzu notwendige Abbremsen und die sich dabei ergebende Federwirkung des Zuges (gefederte Zug- und Stoßvorrichtung zwischen den einzelnen Wagen) ergeben sich weitere Unsicherheiten und Schwierigkeiten beim Aufnehmen (Greifen) der zu entladenden Ladeguteinheiten bzw. beim Absetzen der aufzuladenden Ladeguteinheiten auf den Zug.

Der Erfindung liegt die Aufgabe zugrunde, das Verfahren der eingangs genannten Art und eine Einrichtung zur Durchführung des Verfahrens dahingehend zu verbessern, daß das Umschlagen der Ladeguteinheiten beschleunigt und sicherer gemacht werden kann.

Diese Aufgabe wird - soweit sie das Verfahren betrifft - dadurch gelöst,
daß anfänglich jedem zu ent- und/oder beladenden Tragwagen ein Referenz- oder Meßbezugspunkt zugeordnet wird, dessen zeitlich absolut im Raum veränderliche Position in bezug auf eine feststehende Meßstrecke ständig gemessen wird,
daß anschließend
- im Falle einer zu entladenden Ladeguteinheit die in Schienenlängsrichtung in gleicher Weise veränderliche Position mindestens eines Lastangriffspunktes bzw. einer Erfassungsstelle der Ladeguteinheit (z.B. der Eckaufnahmen (Corner castings) von Containern) und
- im Falle einer aufzuladenden Ladeguteinheit die in Schienenlängsrichtung zeitlich veränderliche Postition der Aufnahme- oder Aufsetzzapfen der Tragwagen
in bezug auf die feststehende Meßstrecke gemessen und als Wegdifferenz zum Referenzpunkt gebildet wird, daß daraufhin die gemeinsame Mitte der Lastangriffspunkte bzw. der Aufnahmezapfen in bezug auf den Referenzpunkt ermittelt wird, wobei die gemeinsame Mitte der Lastangriffspunkte bzw. der Aufnahmeelemente der Mitte der Lageguteinheit bzw. der Mitte des Tragwagens entspricht, daß die Position der Mitte der Lastaufnahmepunkte des zugeordneten Umschlag-Hebezeugs ständig in bezug auf die feststehende Meßstrecke gemessen
und das Umschlag-Hebezeug mit seiner Lastaufnahmemitte auf die Mitte der Lastangriffspunkte bzw. der Aufnahmeelemente gebracht wird, um das Umschlagen zu erlauben.

Der Grundgedanke der Erfindung liegt darin, die zeitlich veränderliche Position der Lastangriffspunkte der Ladeguteinheiten vor deren Aufnehmen (Greifen) bzw. der Aufnahmeelemente des Zuges vor dem Absetzen der Ladeguteinheiten zu jedem Zeitpunkt in bezug auf einen absoluten Wegmaßstab (Meßstrecke) und unabhängig von der jeweiligen Geschwindigkeit zu kennen, um das Umschlag-Hebezeug zielsicher an die erforderliche Position zu führen. Durch die Bildung eines Referenzpunktes je Tragwagen ist die zeitlich veränderliche Position des betreffenden Tragwagens zu jedem Zeitpunkt der Messung bekannt. Durch die anschließende Messung der Lastangriffspunkte bzw. der Aufnahmeelemente und ihrer zugehörigen Mitte zu einem beliebigen Zeitpunkt kann deren relativer Abstand zu dem im gleichen Zeitpunkt gemessenen Referenzpunkt gebildet werden. Somit ist auch jeder Lastangriffspunkt bzw. jedes Aufnahmeelement und die zugehörige Aufnahme- bzw. Absetzmitte in bezug auf den absoluten Wegmaßstab jederzeit bekannt. Die vorgenannte Meßstrecke kann dabei für sich bestehen oder mehrere zueinander geeichte Meßstrecken umfassen.

Dabei kann das Ermitteln der gemeinsamen Mitte der Lastangriffspunkte bzw. der Aufnahmeelemente in bezug auf den Referenzpunkt über das Messen eines weiteren Lastangriffspunktes bzw. eines weiteren Aufnahmeelementes oder über vorbekannte Daten der Trageinheiten erfolgen.

Die Wirksamkeit des erfindungsgemäßen Verfahrens kann noch dadurch erhöht werden, daß die Positionen der Lastangriffspunkte bzw. Aufnahmeelemente auch in ihren horizontal und/oder vertikal quer zur Schienenlängsrichtung verlaufenden Komponenten erfaßt werden. Damit ist es möglich, eine notwendige Seiten- und/oder Winkelkorrektur des Greifrahmens der Umschlag-Hebezeuge frühzeitig vor dem Erfassen bzw. Absetzen der Ladeguteinheit vorzunehmen und so das Umschlagen zu beschleunigen. Da sich die Querkomponenten infolge des Sinuslaufs der Tragwagen ständig ändern können, ist es vorteilhaft, eine entsprechende Messung unmittelbar vor dem Erfassen bzw. Absetzen, d.h. so kurz wie technisch sinnvoll davor, durchzuführen bzw. zu wiederholen. Hierfür geeignete Abstandssensoren können sowohl am Umschlag-Hebezeug als auch an geeigneten raumfesten Punkten angeordnet sein.

Um einen reibungslosen automatischen Betrieb zu ermöglichen, ist vorgesehen, die vorbekannten Daten und gemessenen Positionen der Ladeeinheiten, der Tragwagen und der Umschlag-Hebezeuge in einen Rechner einzugeben und die zu ermittelnden Werte von diesem an die Umschlag-Hebezeuge zu liefern.

Die eingangs genannte Einrichtung zur Durchführung des Verfahrens ist dadurch gekennzeichnet, daß dem Schienenweg mindestens ein Entladebereich und ein Beladebereich zugeordnet ist, daß parallel zum Schienenweg eine Meßstrecke vorhanden ist, der von dem Tragwagen mitnehmbare Meßeinheiten zur Bildung des Referenzpunktes zugeordnet sind, daß - in Bewegungsrichtung des Zuges gesehen - vor jedem Be- bzw. Entladebereich eine Meßeinrichtung vorhanden ist, die geeignet ist, die zeitlich veränderliche Position der Lastangriffspunkte der Ladeeinheit bzw. der Aufnahmeelemente der Tragwagen, bezogen auf die Meßstrecke, zu erfassen und daß die Umschlag-Hebezeuge über jeweils eine Meßeinrichtung an eine weitere, der ersten zugeordneten Meßstrecke angeschlossen sind.

Für unterschiedliche Ladeguteinheiten müssen auf den Wagen unterschiedliche Aufnahmeelemente, z.B. Aufsetzzapfen, vorgesehen werden. Um die Aufnahmeelemente des langsam fahrenden Zuges bei einer etwaigen Änderung des Typs der Ladeguteinheit (im einfachsten Fall der Änderung der Länge eines Containers) sicher durchführen und kontrollieren zu können, ist vorgesehen, zwischen die Be- und Entladebereiche einen Umrüstbereich vorzusehen.

Die der Meßstrecke zugeordneten Meßeinheiten weisen zur Bildung des Referenzpunktes vorzugsweise ein mit dem jeweiligen Tragwagen in Verbindung bringbares Teil auf, das in einer bevorzugten Ausführungsform als Kragarm ausgebildet ist, an dessen Ende eine Rolle angeordnet ist.

Um die beim Berührvorgang zwischen dem Kragarm und dem Tragwagen auftretenden Kraftspitzen zu reduzieren, ist vorgesehen, die Rolle über einen Stoßdämpfer mit Rückführeinrichtung am Kragarm zu lagern, wobei die Rückführeinrichtung die Rolle in bezug auf den Kragarm in eine Soll- oder Bezugslage bringt.

Damit das Mitnehmerteil der Meßeinrichtung bei einer plötzlichen Verzögerung des Tragwagens nicht abhebt, ist vorgesehen, diesem einen Magneten zuzuordnen, wobei dieser in einer bevorzugten Ausführungsform an einem schwenkbaren Hebel gelagert ist, der wiederum durch eine weitere Rolle am Tragwagen bzw. einem Rad desselben abstützbar ist. Die Schwenkbarkeit erlaubt eine Anpassung der Lage des Magneten an Räder unterschiedlicher Durchmesser, wobei die weitere Rolle für den notwendigen Abstand zwischen Magnet und Tragwagenrad sorgt.

Um auch in Querrichtung (y-Richtung) eine verläßliche Aussage über die jeweiligen Koordinaten der Lastangriffspunkte der Ladeguteinheiten bzw. der Aufsetzpunkte der Tragwagen zu erhalten, sind die Meßeinheiten bei einer vorteilhaften Weiterbildung der Erfindung mit einem quer angeordneten Entfernungsmeßgerät ausgestattet, das auf ein Teil, vorzugsweise auf die Innenfläche eines Rades, des Trag- bzw. Transportwagens gerichtet ist.

Um die Meßeinheiten an die Tragwagen in beiden Bewegungsrichtungen ankoppeln zu können, ist vorgesehen, deren Mitnehmereinheit mit Rolle und schwenkbarem Hebel mit Magnet und weiterer Rolle symmetrisch zum Kragarm auszubilden.

Um den Meßeinheiten die notwendige Rückführung zu ermöglichen, ist zusätzlich vorgesehen, daß an beiden Enden der Meßstrecke eine Vorrichtung vorhanden ist, die geeignet ist, die Meßeinheiten aus dem Bereich der Meßstrecke zurückzuziehen bzw. sie in diese hineinzubewegen.

Der Rücktransport der Meßeinheit findet vorzugsweise auf einem zur Meßstrecke parallelen Transportweg statt, dem eine Antriebsanordnung vorteilhafterweise in Form eines Endlosbandes zugeordnet ist, das mit Mitnehmerelementen für die Meßeinheiten ausgerüstet ist.

Das Endlosband besteht vorzugsweise aus nichtmagnetisierbarem Material und die Mitnehmerelemente aus magnetisierbarem Material, während die Meßeinheiten Magnete aufweisen, die im Bereich des Laufweges der Mitnehmerelemente liegen.

Um den Platz neben dem Gleis anders nutzen zu können, kann es vorteilhaft sein, die Meßstrecke einschließlich Meßeinheiten und deren Transportsystem (Führung, Umsetzer und Antrieb für Rücktransport) zwischen den Schienen des Gleises bzw. innerhalb des Gleises anzuordnen.

Die Meßeinrichtungen zum Erfassen der Position der Angriffspunkte der Ladeguteinheiten bzw. der Aufnahmeelemente der Tragwagen sind vorzugsweise als Laser-Entfernungssensor ausgebildet, der um eine feststehende vertikale und eine horizontale Achse schwenkbar ist und integrierte Winkelsensoren aufweist. Bei feststehender Position, gemessener Entfernung und gemessenen Winkeln (in horizontaler und vertikaler Richtung) ist es jederzeit möglich, die entsprechenden kartesischen Koordinaten in Schienenlängsrichtung und quer dazu zu bestimmen.

Zur Beschleunigung des Umschlags der Ladeguteinheiten sind die Meßeinheiten, die Meßeinrichtungen und die Steuerung der Fahrantriebe der Hebezeuge mit einem zentralen Rechner verbunden.

Um das Absetzen der Ladeguteinheiten am Lager möglichst problemlos vornehmen zu können, weist das lagerinterne Transportsystem mindestens einen Querförderer mit plattenförmigen Transporteinheiten auf, die zumindest zeitweise jeweils eine definierte Lage einnehmen.

Ein Ausführungsbeispiel der Erfindung ist in der Zeichnung z.T. schematisch dargestellt und wird im folgenden näher erläuert. Es zeigen
- Fig. 1: ein Lager mit einer Umschlageinrichtung in einer stark vereinfachten Draufsicht,
- Fig. 2: die Meßstrecke mit den Meßeinheiten und einen aus Tragwagen gebildeten Zug in einer schematisierten Draufsicht,
- Fig. 3: die der Meßstrecke zugeordneten Meßeinheiten in einem Querschnitt längs der Linie III-III in Fig. 2,

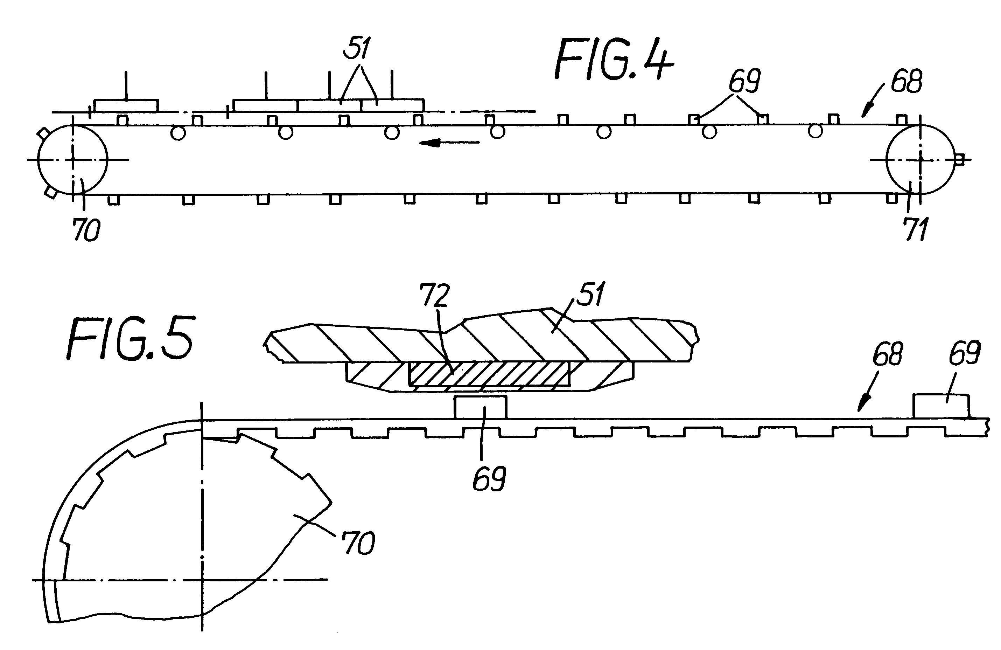

- Fig. 4: das den Meßeinheiten zugeordnete Rückführband in einer teilweise gemäß der Linie IV-IV in Fig. 3 geschnittenen Ansicht,
- Fig. 5: eine auszugsweise Darstellung des Rückführbandes in einer vergrößerten Darstellung,
- Fig. 6: eine Anordnung zur Mitnahme der Meßeinheiten durch einen Tragwagen in einer Ansicht,
- Fig. 7: eine Meßeinrichtung zur Erfassung der Lastangriffspunkte der Trageinheiten in der Draufsicht,
- Fig. 8: die Meßeinrichtung gemäß Fig. 7 in einer Ansicht senkrecht zu der Ebene durch die vertikale Schwenkachse 77 der Meßeinrichtung und die vom Laserstrahl angepeilte Eckaufnahme 81 des Containers 82 und - unmittelbar anschließend - in einem senkrechten Querschnitt durch den Container,
- Fig. 9: ein Umschlag-Hebezeug in einer Ansicht in Schienenlängsrichtung,
- Fig.10: einen am Spurkranz eines Fahrzeugrades angreifenden Meßwagen mit zusätzlicher Quermeßeinrichtung und
- Fig.11: die Anordnung in einem Querschnitt längs der Linie XI-XI in Fig. 10.

Die gesamte Umschlageinrichtung weist einen Lagerkomplex 1, ein entlang diesem verlegtes Gleis 2 und einen um den Lagerkomplex 1 führenden Fahrbereich 3 und ggf. Parkplätze 4 für Straßenfahrzeuge 5 auf. In Gleisrichtung gesehen, sind vor und hinter dem Lagerkomplex 1 - je nach Fahrtrichtung des zu be- und/oder entladenden Zuges 6 gesehen - Ein- bzw. Ausfahrstationen 7, 8 angeordnet (hierfür ist auch die Bezeichnung Ein- bzw. Ausfahrgate gebräuchlich).

Der Lagerkomplex 1 weist drei voneinander getrennte Hochregallagerteile bzw. -bereiche, die beiden endseitigen Teile bzw. Bereiche 11, 12 und den mittleren Teil bzw. Bereich 13 auf, die jeweils durch eine Gasse bzw. durch einen Arbeitsraum 14, 15 getrennt sind. Der das Gleis 2 einschließende, an den Lagerkomplex 1 angrenzende Bereich im wesentlichen entlang des Lagerteils 11 und der Gasse 14 und entlang des Lagerteils 12 und der Gasse 15 stellt jeweils einen Schienenumschlagbereich 16 bzw. 17 dar. Jeder Schienenumschlagbereich weist zwei Umschlaggeräte oder Umschlag-Hebezeuge 18 auf, die auf parallel zum Gleis 2 verlaufenden Kranlaufschienen 22, 23 verfahrbar sind.

Im Bereich des nach außen unmittelbar nicht zugänglichen mittleren Lagerteils 13 ist eine das Gleis 2 einschließende Wagenumrüstzone 24 vorgesehen. An der dem Gleis 2 gegenüberliegenden Seite des Lagerkomplexes 1 ist im Bereich der Gassen 14, 15 jeweils ein Straßenumschlagbereich 25 mit je einem Umschlaggerät 27 zum Be- und Entladen von Straßenfahrzeugen 5.

Im Bereich der Gassen 14, 15 sind Querförderer 30, 31 vorgesehen. Diese weisen einzelne Transporteinheiten oder Paletten 32 auf, die - mit eigenem Antrieb - in zwei Ebenen in beiden Richtungen verfahrbar sind. Dabei sind sie zumindest in der oberen Ebene so eng angrenzend, daß sie einen durchgehenden "Boden" bilden. An beiden Enden der Querförderer 30, 31 sind außerhalb des eigentlichen Lagerkomplexes 1 Hubeinrichtungen 33 (im Bereich der Schiene 2) und 34 (im Bereich des Straßenumschlagbereichs 25) vorgesehen, so daß die fahrbaren Transporteinheiten 32 von einer zur anderen Ebene angehoben bzw. abgesenkt werden können. Bei der Zugentladung befindet sich zur Aufnahme und Übergabe einer Ladeguteinheit durch das Umschlag-Hebezeug 18 die Transporteinheit 32 in den Hubeinrichtungen 33 jeweils in der oberen Ebene bzw. wird in diese angehoben. Die Transporteinheiten 32 der Querförderer 30, 31 bewegen sich bei der Zugentladung und/oder Straßenfahrzeugbeladung in der oberen Ebene von der Schiene 2 weg, bei der Zugbeladung und/oder Straßenfahrzeugentladung zur Schiene 2 hin (vgl. die Doppelpfeile in Richtung der Regalgassen 14, 15).

Oberhalb der Querförderer 30, 31 ist in den Gassen 14, 15 jeweils ein Hubgerüst verfahrbar, in dem ein Führungsrahmen heb- und senkbar ist. An dem Führungsrahmen ist ein sog. Kanalfahrzeug angehängt, das die umzuschlagende Ladeguteinheit mit einem Greifrahmen (Spreader) erfassen und in die einzelnen Boxen der Lagerteile 11 oder 13 bzw. 12 oder 13 bringen kann.

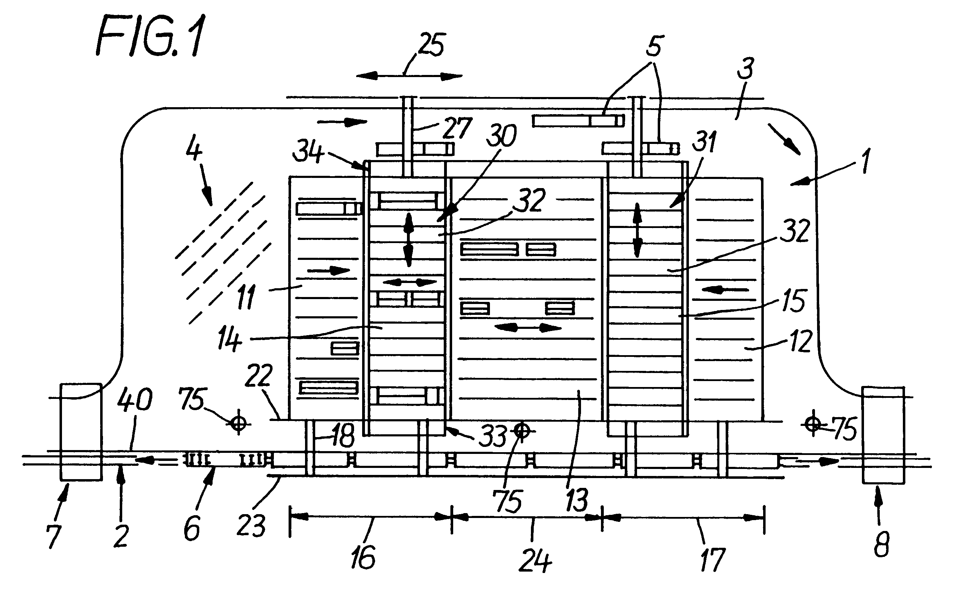

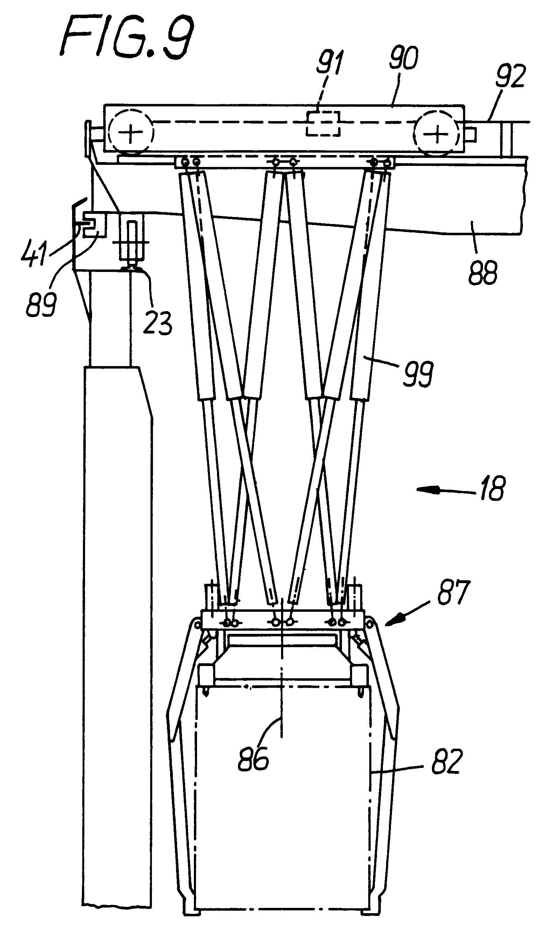

Parallel zum Gleis 2 ist eine Meßschiene 40 angeordnet, die im wesentlichen von der Station 7 bis zur Station 8 reicht und einen feststehenden Wegmaßstab einer absolut arbeitenden Meßstrecke darstellt (Fig. 1 bis 3). Wiederum parallel, aber nur über die Länge des Lagerkomplexes 1 ist eine weitere Meßschiene 41 für die Umschlag-Hebezeuge 18 vorgesehen (Fig. 9). Beide Meßschienen 40, 41 sind aufeinander geeicht.

Parallel zur Meßschiene 40 ist ein aus zwei Führungsschienen 42 gebildeter Laufweg 43 angeordnet, auf dem Meßeinheiten oder Meßwagen 44 bewegbar geführt sind. Die Meßwagen 44 sind mit einem Mitnehmerkragarm 45 ausgerüstet, an dessen Ende sich ein Mitnehmerteil 46 befindet. Dieses z.B. als Rolle ausgebildete Mitnehmerteil reicht in den Bereich der Räder 47 der den Zug 6 bildenden Transport- oder Tragwagen 48 außerhalb des übrigen Fahrzeugprofils. Die Meßwagen 44 sind an der der Meßschiene 40 zugewandten Seite mit einem Meß- oder Lesekopf 49 und an der gegenüberliegenden Seite mit einer Mitnehmerfahne 51 ausgerüstet. Der Meßkopf 49 weist einen Schlitz 52 auf, mit dem er die Meßschiene 40 umschließt. Der Meßwagen 44 kann seine jeweilige Position an der Meßschiene 40 ablesen und über ein geeignetes Datenübertragungssystem an einen zentralen Rechner weitergeben. Die Meßwagen 44 bilden mit der Meßschiene 40 also ein absolut arbeitendes Wegmeßsystem.

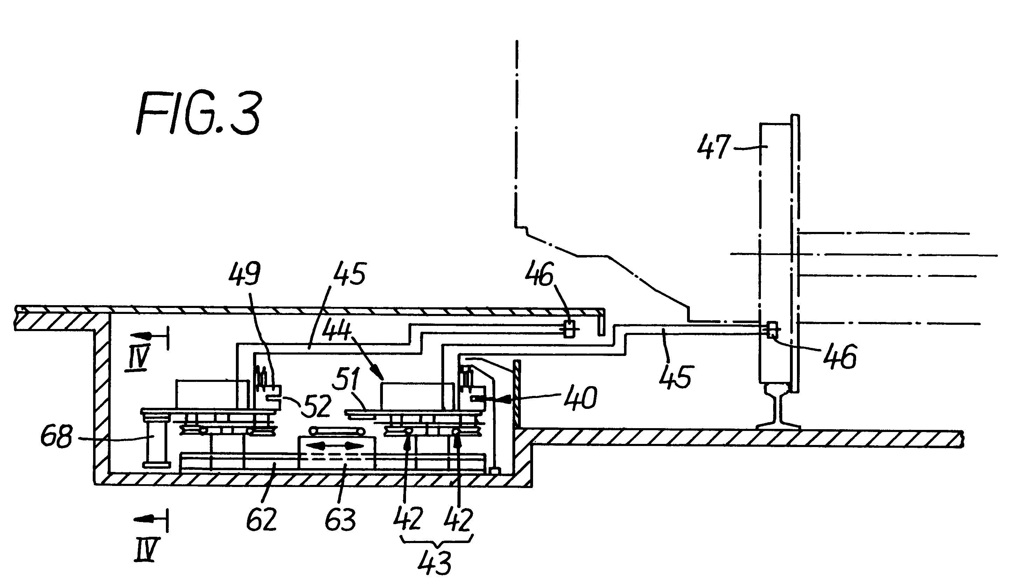

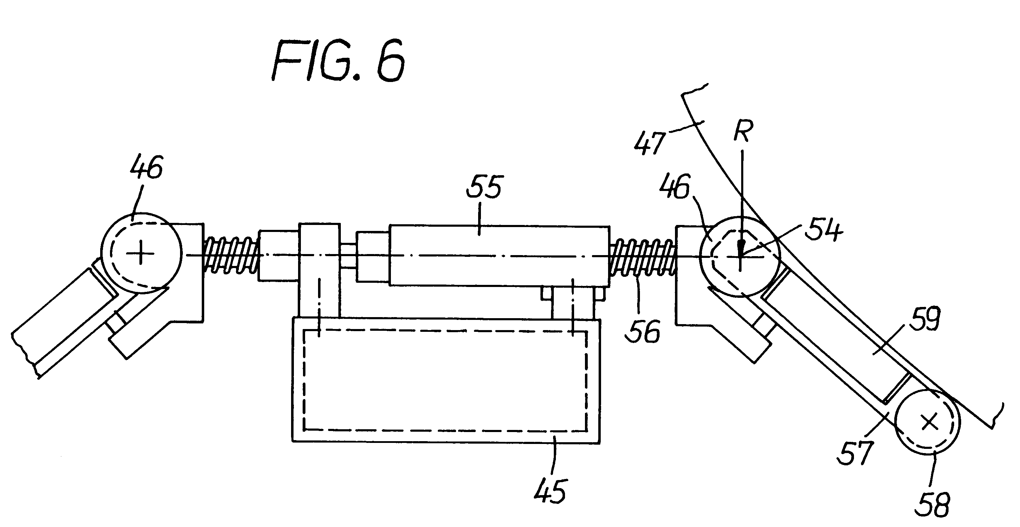

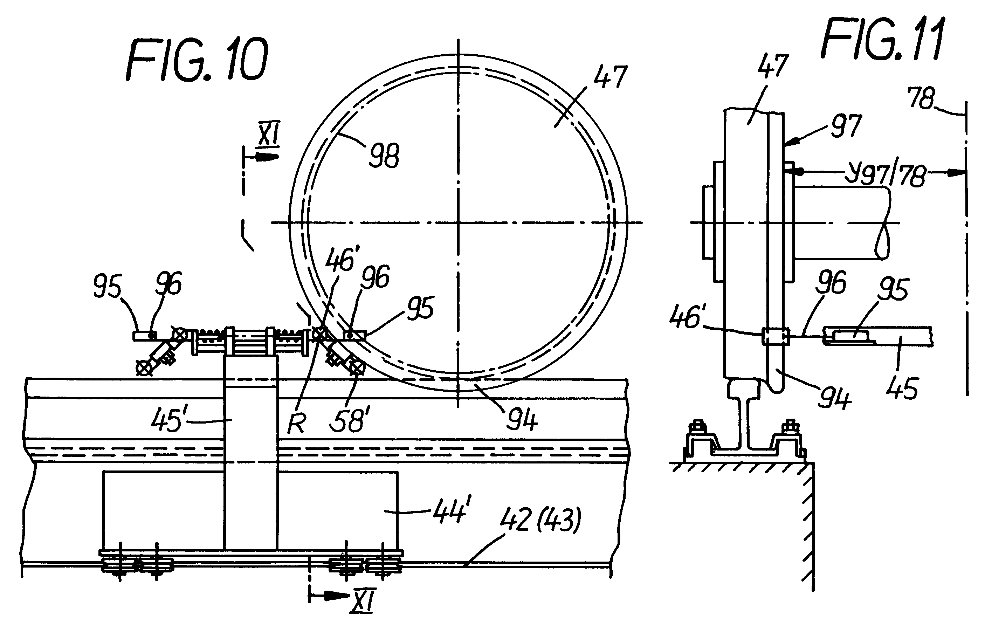

Wenn ein Meßwagen 44 in der Flucht des Fahrweges 43 ist (vgl. Fig. 3), reicht die Rolle 46 in das Radprofil - im Bereich der Lauffläche (Fig. 3) oder des Spurkranzes (Fig. 10) - und wird von dem ersten Rad 47 eines herannahenden Tragwagens 48 erfaßt, und der Meßwagen 44 wird so über den Kragarm 45 von dem Tragwagen 48 mitgenommen. Der Mittelpunkt bzw. die Achse 54 der Rolle 46 stellt für den betreffenden Tragwagen 48 - von der Seite gesehen - einen Bezugsmeß- oder Referenzpunkt R dar (Fig. 6), der sich in bezug auf den Tragwagen 48 in Richtung des Gleises 2 und der Meßschiene 40 (x-Richtung) nicht verändert und zeitlich gesehen die gleiche Wegstrecke zurücklegt wie dieser.

Damit die Rolle 46 nicht beschädigt und der Kragarm 45 nicht überbeansprucht wird, ist die Rolle über einen Stoßdämpfer 55 am Kragarm 45 befestigt, wobei eine Druckfeder 56 die Soll- oder Bezugsposition der Rolle 46 in bezug auf den Kragarm 45 schnell wieder herstellt. Damit die Rolle 46 bei einer Verzögerung des Wagens 48 nicht von dem Rad 47 abhebt und der Referenzpunkt R verlorengeht, ist ein um die Achse 54 schwenkbarer Hebel oder Rahmen 57 vorgesehen, der an seinem anderen Ende mit einer weiteren Stützrolle 58 und in seiner Mitte mit einem Magneten 59 versehen ist. Die schwenkbare Anordnung des Hebels 57 bzw. des Magneten 59 erlaubt ein sicheres Ankoppeln des Meßwagens 44 an Räder 47 unterschiedlicher Durchmesser.

Die Meßwagen 44 sind für die Messung in beiden Fahrtrichtungen vorgesehen. Das Mitnehmerteil am Kragarm 45 weist deshalb zu beiden Seiten einen im wesentlichen symmetrischen Aufbau auf.

Der Fahrweg 43 erstreckt sich im wesentlichen über die gesamte Länge der Meßschiene 40 und damit von einer Einfahrstation 7 bzw. 8 zur anderen. Im Bereich der Station 8 befindet sich ein Umsetzer oder eine Schiebebühne 60 mit den Führungsschienen 42 entsprechenden Führungsschienen 61. Die Schiebebühne 60 ist auf zwei quer zum Gleis 2 ausgerichteten Laufschienen 62 verfahrbar. Eine entsprechende Schiebebühne (Umsetzer) 63 befindet sich am Anfang der Meßschiene in der Nähe der Station 7. Parallel zum Laufweg 43 befindet sich an der von Gleis 2 abgewandten Seite ein weiterer Laufweg 65, der aus entsprechenden Laufschienen 66 besteht. Unmittelbar hinter dem Laufweg 65, und zwar an der Seite der Mitnehmerfahnen 51 der Meßwagen 44, ist ein dazu parallel ausgerichtetes Endlosband 68 angeordnet, das mit Teilen 69 aus magnetisierbarem Werkstoff bestückt ist. Das Endlosband 68 ist um zwei Rollen 70, 71 umgelenkt und in beiden Richtungen antreibbar. Unter den Mitnehmerfahnen 51 der Meßwagen 44 sind Magnete 72 angeordnet. Diese üben gegenüber den Teilen 69 eine Kraftwirkung aus, durch die die Meßwagen 44 durch das Endlosband 68 entlang des Laufweges 65 angetrieben bzw. bewegt werden können.

Die gesamte Einrichtung zur kontinuierlichen Messung der zeitlich veränderlichen Position der Referenzpunkte R der Tragwagen 48 kann - einschließlich der Meßschienen 40, Meßwagen 44, Laufwege 43, 65, Umsetzer 60, 63 und Rücktransporteinrichtung 68 - entweder (wie in Fig. 3 dargestellt) seitlich neben dem zu bedienenden Gleis 2 oder innerhalb desselben, d.h. zwischen den beiden Schienen des Gleises angeordnet sein.

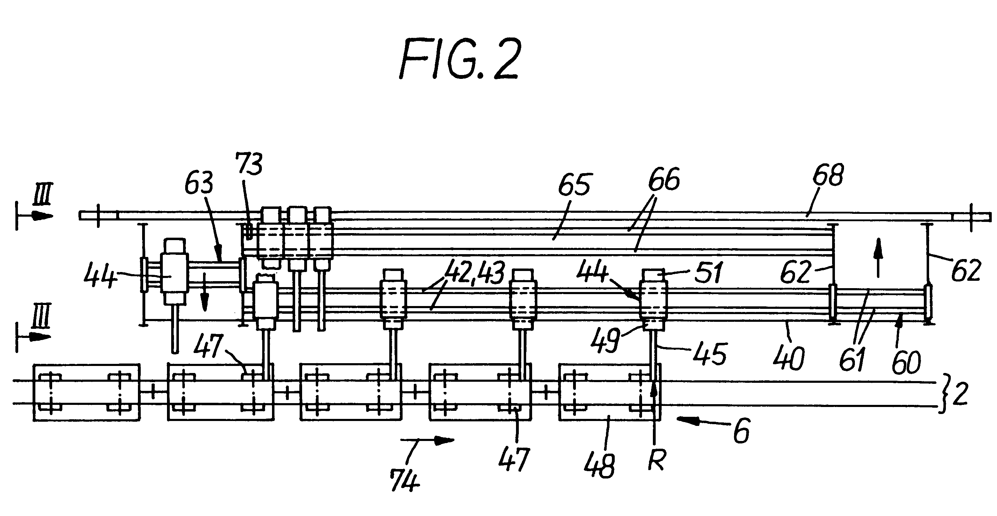

Bei der Durchfahrt des aus den Transport- oder Tragwagen 48 zusammengestellten Zuges 6 mit langsamer (Kriech-) Geschwindigkeit durch die Einfahrstation 7 bzw. 8 wird mit Hilfe eines (nicht dargestellten) Schienenschalters anhand der Radfolge eine Lücke zwischen den Tragwagen 48 erkannt und jedem zu ent- und/oder beladenden Tragwagen 48 ein Meßwagen 44 zugeordnet. Dazu wird der jeweilige Meßwagen 44 auf dem Schlitten 63, der z.B. durch (nicht dargestellte) Hydraulikzylinder bewegbar ist, zur Meßschiene 40 und die Rolle 46 in den Bereich der Räder 47 des Tragwagens bewegt. Der Meßwagen 44 wird, wie beschrieben, durch das Rad 47 des Tragwagens 48 in Richtung auf den Schienenumschlagbereich 16 mitgenommen (vgl. den Pfeil 74 in Fig. 2). Damit ist für jeden Wagen 48 ein Referenzpunkt R vorhanden, dessen zeitlich veränderliche absolute Lage in Längsrichtung (x-Richtung) ständig durch den Lesekopf 49 des betreffenden Meßwagens 44 gemessen wird. Im Anschluß an den Laufweg 43 wird der Meßwagen 44 auf die Schiebebühne 60 gefahren. Unmittelbar darauf wird die Schiebebühne 60 vom Gleis 2 weg in Richtung auf den Laufweg 65 bewegt. Die Messung des Referenzpunktes R ist damit deaktiviert.

Wenn die Führungsschienen 61 der Schiebebühne 60 mit den Führungsschienen 66 des Laufweges 65 fluchten, wird der Meßwagen, wie beschrieben, von dem Endlosband 68 in Richtung auf die Schiebebühne 63 mitgenommen. Unmittelbar vor der Schiebebühne 63 ist eine Sperre 73 eingebaut, die den Durchlaß für einen Meßwagen 44 nur freigibt, wenn die Schiebebühne 63 mit ihren Führungsschienen zu den Führungsschienen 66 des Laufweges 65 fluchtet.

Der Meßwagen 44 auf der Schiebebühne 63 wird beim Erkennen einer Lücke zwischen zwei Tragwagen 48 erneut in das Profil der Räder 47 eingebracht.

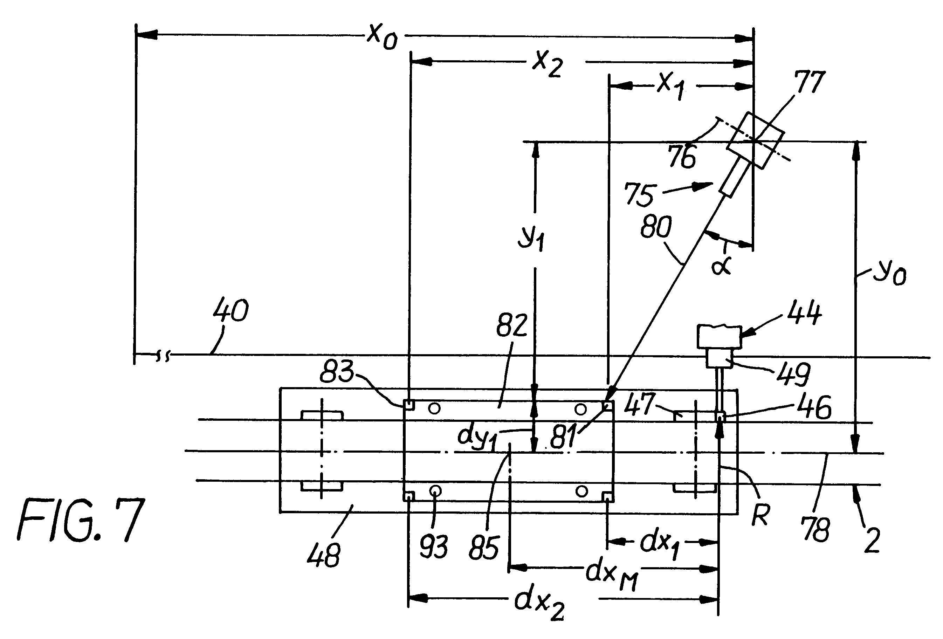

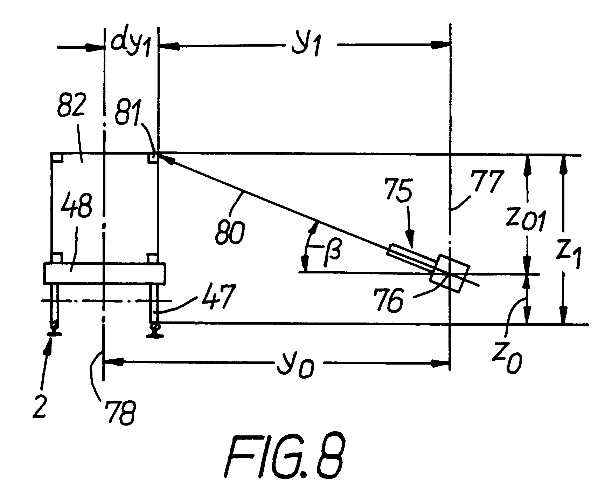

Zwischen den Stationen 7 und 8 und den Schienenumschlagbereichen 16 bzw. 17 sowie im Umrüstbereich 24 sind handelsübliche Laser-Entfernungssensoren 75 angeordnet (Fig. 1, 7 und 8). Diese Sensoren sind auf einer um eine feststehende vertikale Achse 77 schwenkbaren Positionierhalterung montiert, um eine horizontale Achse 76 schwenkbar und mit integrierten Winkelsensoren ausgerüstet. Dabei ist die horizontale Achse 76 um die vertikale Achse 77 schwenkbar. Der ausgesandte Laserstrahl 80 kann z.B. mit einem nicht dargestellten Steuerhebel (joy stick) zumindest innerhalb eines Bereichs beliebig im Raum ausgerichtet werden. Die vertikale Achse 77 hat einen definierten Abstand y₀ zur lotrechten Ebene 78 durch die Mitte des Gleises 2 und einen definierten Abstand x₀ zum Nullpunkt der Meßschiene 40 in Schienenlängsrichtung. In Fig. 7 ist ein Laserstrahl 80 auf eine Eckverbindung (Corner casting) 81 eines auf einem Tragwagen 48 befindlichen Containers 82 gerichtet dargestellt. Das Ausrichten des Laserstrahls 80 auf die gewünschte Stelle kann über den Steuerhebel von einer Bedienungsperson erfolgen und überwacht werden. Durch die gleichzeitige momentane Messung des horizontalen Winkels α, des vertikalen Winkels β und der Entfernung des Laserstrahls 80 ergeben sich die Längs- und Querkoordinaten x₁ und y₁ der Eckverbindung 81 in bezug auf die vertikale Achse 77 des Sensors 75 zum Meßzeitpunkt. Zum gleichen Zeitpunkt ist über die kontinuierliche Messung auch die Lage des Referenzpunktes R durch den Meßwagen 44 in Längsrichtung (x-Richtung) bekannt, so daß sich der zeitlich unveränderliche relative Abstand dx₁ zwischen Referenzpunkt R und Eckverbindung 81 (Fig. 7) in Schienenlängsrichtung ermitteln läßt. In gleicher Weise kann die Eckaufnahme 83 vermessen und ihr relativer Abstand dx₂ gegenüber dem Referenzpunkt R bestimmt werden. Aus diesen Werten läßt sich der relative Abstand dx_{M} der gemeinsamen Mitte 85 der Eckaufnahmen 81, 83, ... des Containers 82 relativ zum Referenzpunkt R ermitteln. Zusätzlich lassen sich aus den o.g. drei Meßwerten auch die Abstände der Eckaufnahmen 81 bzw.83 und deren gemeinsame Mitte 85 von der Mittelebene 78 bestimmen.

Mit den so ermittelten Angaben läßt sich das Umschlag-Hebezeug 18 mit der Mitte 86 seines Greifrahmens 87 bei richtiger Greifrahmeneinstellung (Länge für 20'- oder 40'-Container, usw.) zielgenau auf die - langsam bewegte - Tragguteinheit 82 aufsetzen. Zur Steuerung der Antriebe des Umschlag-Hebegeräts 18 ist in den Schienenumschlagbereichen 16, 17 parallel zur Laufschiene 23 eine Meßschiene 41 angeordnet, der ein am Kranträger 88 angeordneter Meßkopf 89 zugeordnet ist.

Die Kranfahrkatzen 90 sind mit einem entsprechenden Meßkopf 91 und die Kranträger mit einer entsprechenden Meßschiene 92 quer zur Richtung des Gleises 2 ausgerüstet.

Der Greifrahmen (Spreader) 87 ist über sechs schräggestellte Hydraulikzylinder 99 sowohl heb- und senkbar als auch in seiner Position in Gleislängs- und querrichtung verstellbar und um alle drei Raumachsen schwenkbar. Der Vorteil dieser Ausführungsform des Umschlag-Hebezeugs 18 liegt darin, daß die Lage des Greifrahmens 87 immer definiert ist und nicht durch Pendelbewegungen der Kontrolle entgleitet. Eine etwaige - durch die vorangegangene Messung bekannte - Schrägstellung der Ladeguteinheit 82 auf dem Tragrahmen 47 kann durch unterschiedliches Ansteuern der einzelnen Hydraulikzylinder weitgehend ausgeglichen werden.

Wenn der Greifrahmen 87 auf dem Container 82 aufliegt und mit diesem verriegelt ist, kann der Container abgehoben werden. Dabei fährt das Umschlag-Hebegerät 18 mit dem Tragwagen 48 synchron bis der Container aus dem Lichtraumprofil herausgehoben ist. Nach dem Abheben und Verlassen des Lichtraumprofils des Zuges wird der Container von dem Umschlag-Hebegerät 18 zentriert, d.h. es werden etwaige Lageabweichungen in Querrichtung und Winkelabweichungen eliminiert.

Das Umschlag-Hebegerät 18 setzt den Container 82 dann an einer definierten Position auf die in der Hubeinrichtung 34 befindliche Transporteinheit 32 ab. Diese Position können das Regalbediengerät und das Straßenumschlaggerät 27 auch nach einem Verfahren der Transporteinheit 32 ohne weitere Vermessung wiederfinden.

Nach dem Entladen der Ladeguteinheit 82 wird der Tragwagen 48, wenn anschließend eine anders geartete Ladeguteinheit, z.B. ein 40'-Container statt eines 20'-Containers, zugeladen werden soll, umgerüstet. Dazu werden die nicht mehr benötigten, in Fig. 7 mit 93 angedeuteten, Trag- oder Aufnahmezapfen weggeklappt und die neu benötigten Tragzapfen am Tragwagen 48 eingeschwenkt. Um sicherzugehen, daß die Lage der umgerüsteten Tragzapfen für die neu zu verladende Ladeguteinheit stimmt, wird die Lage der Zapfen 93 - wieder in bezug auf den Referenzpunkt R des Tragwagens 48 - vermessen, und zwar diesmal von dem Laser-Entfernungssensor 75 in der Umrüstzone 24, und mit den entsprechenden Sollmaßen verglichen. Wenn der Tragwagen 48 am Ende der Meßschiene 40 angekommen ist, wird der Meßwagen 44 von dem in Frage kommenden Umsetzer oder Schlitten 60 bzw. 63 aus dem Bereich des Tragwagens 48 zurückgenommen, durch das Endlosband 68 ans andere Ende der Meßschiene zurückbefördert und durch den anderen Schlitten 63 bzw. 60 wieder zur Einschleusung auf die Meßstrecke bereitgestellt.

Bei dem in Fig. 10 dargestellten Meßwagen 44' sind die Rollen 46' und 58' als Mitnehmerteil im Bereich des Spurkranzes 94 des Rades 47 eines Tragwagens 48 angeordnet. Der Kragarm 45' weist einen Laser-Entfernungssensor 95 als Distanzmeßgerät auf, dessen optische Achse 96 - bei am Spurkranz 94 anliegenden Rollen 46', 58' - in unmittelbarer Nähe des Referenzpunktes R auf die Innenfläche 97 des Radkranzes 98 des Rades 47 gerichtet ist. Mit dem Berühren der Rollen 46', 58' an dem Spurkranz wird über den gesamten Laufweg kontinuierlich die jeweils akute Entfernung zwischen der Innenfläche 97 des Radkranzes 98 und dem Laser-Entfernungssensor 95 bzw. dem der Meßschiene 40 zugeordneten Laufweg 43 und damit auch ihre Entfernung y_{97/78} in bezug auf die Mittelsenkrechte 78 durch das Gleis 2 gemessen.

Durch die oben beschriebene Einzelmessung der Querkoordinate y₁ der nächstliegenden Eckaufnahme 81 bzw. des Tragzapfens 93 in bezug auf die horizontale Schwenkachse 77 des Entfernungssensors 75 zu einem Zeitpunkt, der in die kontinuierliche Messung fällt, erhält man über den festen Wert y₀ (Abstand der horizontalen Achse 77 von der Mittelsenkrechten 78) den Abstand d_{y1} der Eckaufnahme 81 bzw. des Tragzapfens 93 in bezug auf die Mittelsenkrechte 78 zu diesem Zeitpunkt.

Durch einen Vergleich des d_{y1}-Wertes und der zum gleichen Zeitpunkt durch die kontinuierliche Messung aktuell ermittelten Entfernung y_{97/78} der Innenfläche 97 des Rades 47 zur Mittelsenkrechten 78 ergibt sich während der weiteren kontinuierlichen Messung die jeweilige auf die Mittelsenkrechte 78 bezogene, zeitlich veränderbare Querkomponente der Eckaufnahme 81 bzw. des Tragzapfens 93. Durch Einbeziehung einer weiteren Eckaufnahme 83 bzw. eines weiteren Tragzapfens 93 läßt sich so die - wiederum auf die Mittelsenkrechte 78 bezogene - Querkomponente der Mitte 85 der Ladeguteinheit 82 (die im Idealfall Null ist) zu jedem beliebigen Zeitpunkt bestimmen. Mit dem so bestimmten Wert kann die Mitte 86 des Umschlag-Hebezeugs 18 präzise über die Mitte 85 der Ladeguteinheit 82 gebracht und das Aufnehmen der Ladeguteinheit 82 so beschleunigt werden.

Zur Ladegut- und Tragwagenvermessung kann anstelle des Laser-Lichtzeigers und -Entfernungssensors auch ein Laser-Scanner eingesetzt werden, um einen vollautomatischen Betrieb zu ermöglichen.

## Patentansprüche

1. Verfahren zum Kontrollieren des Umschlagens von Ladeguteinheiten (82) wie Containern, Wechselbehältern, Sattelaufliegern od.dgl. von einem bzw. auf einen langsam fahrenden, aus Tragwagen (48) gebildeten Zug (6) mittels Umschlag-Hebezeugen (18),
dadurch gekennzeichnet,
daß anfänglich jedem zu ent- und/oder beladenden Tragwagen (48) ein Referenzpunkt (R) zugeordnet wird, dessen zeitlich absolut im Raum veränderliche Position in bezug auf eine feststehende Meßstrecke (40) ständig gemessen wird,
daß anschließend
- im Falle einer zu entladenden Ladeguteinheit (82) die in Schienenlängsrichtung in gleicher Weise veränderliche Position mindestens eines Lastangriffspunktes (81) der Ladeguteinheit (82) und
- im Falle einer aufzuladenden Ladeguteinheit inheit (82) die in Schienenlängsrichtung zeitlich veränderliche Position der Aufnahmeelemente (93) der Tragwagen (48)
in bezug auf die feststehende Meßstrecke (40) gemessen und als Wegdifferenz zum Referenzpunkt (R) gebildet wird,
daß daraufhin die gemeinsame Mitte (85) der Lastangriffspunkte (81) bzw. der Aufnahmeelemente (93) in bezug auf den Referenzpunkt (R) ermittelt wird, wobei die gemeinsame Mitte (85) der Lastangriffspunkte (81) bzw. der Aufnahmeelemente (93) der Mitte der Ladeguteinheit (82) bzw. der Mitte des Tragwagens (48) entspricht, daß die Position der Mitte (86) der Lastaufnahmepunkte des zugeordneten Umschlag-Hebezeugs (18) ständig in bezug auf die feststehende Meßstrecke (40, 41) gemessen
und das Umschlag-Hebezeug mit seiner Lastaufnahmemitte (86) auf die Mitte (85) der Lastangriffspunkte (81) bzw. der Aufnahmeelemente (93) gebracht wird,
um das Umschlagen zu erlauben.

2. Verfahren nach Anspruch 1, dadurch gekennzeichnet, daß das Ermitteln der gemeinsamen Mitte (85) der Lastangriffspunkte (81) bzw. der Aufnahmeelemente (93) über das Messen eines weiteren Lastangriffspunktes (83) bzw. eines weiteren Aufnahmeelementes erfolgt.

3. Verfahren nach Anspruch 1, dadurch gekennzeichnet, daß das Ermitteln der gemeinsamen Mitte (85) der Lastangriffspunkte (81) einer Ladeguteinheit (82) über vorbekannte Daten der Ladeguteinheit erfolgt.

4. Verfahren nach einem der Ansprüche 1 bis 3, dadurch gekennzeichnet, daß die Position der Lastangriffspunkte (81) und/bzw. der Aufnahmeelemente (93) auch mit ihrer quer zur Schienenlängsrichtung verlaufenden Komponente ermittelt werden.

5. Verfahren nach einem der Ansprüche 1 bis 4, dadurch gekennzeichnet, daß die vorbekannten Daten und gemessenen Positionen der Ladeguteinheiten (82), der Tragwagen (48) und der Umschlag-Hebezeuge (18) in einen Rechner eingegeben und die zu ermittelnden Werte insbesondere zur Steuerung der Umschlag-Hebezeuge (18), von diesem geliefert werden.

6. Einrichtung mit einem aus mindestens einem Gleis (2) bestehenden Schienenweg, einem Lagerkomplex (1) mit lagerinternem Transportsystem (30, 31) und Umschlag-Hebezeugen (18), die den Schienenweg (2) und das lagerinterne Transportsystem (30, 31) erfassen, zur Durchführung des Verfahrens nach mindestens einem der Ansprüche 1 bis 5,
dadurch gekennzeichnet,
daß dem Schienenweg (2) mindestens ein Entladebereich und mindestens ein Beladebereich (16, 17) zugeordnet ist,
daß parallel zum Schienenweg (2) eine Meßstrecke (40) vorhanden ist, der von den Tragwagen (48) mitnehmbare Meßeinheiten (44) zur Bildung eines Referenzpunktes (R) zugeordnet sind,
daß - in Bewegungsrichtung des Zuges (6) gesehen - vor jedem Be- und Entladebereich (16 bzw. 17) eine Meßeinrichtung (75) vorhanden ist, die geeignet ist, die zeitlich veränderliche Position der Lastangriffspunkte (81) der Ladeguteinheiten (82) bzw. der Aufnahmeelemente (93) der Tragwagen (48), bezogen auf die Meßschiene (40), zu erfassen und daß die Umschlag-Hebezeuge (18) über jeweils eine Meßeinrichtung (89) an eine weitere, der ersten zugeordneten entsprechenden Meßschiene (41) angeschlossen sind.

7. Einrichtung nach Anspruch 6, dadurch gekennzeichnet, daß zwischen dem Beladebereich (16 bzw. 17) und dem Entladebereich (17 bzw. 16) ein Umrüstbereich (24) vorgesehen ist.

8. Einrichtung nach Anspruch 6 oder 7, dadurch gekennzeichnet, daß die der Meßstrecke (40) zugeordneten Meßeinheiten (44) zur Bildung des Referenzpunktes (R) ein mit dem jeweiligen Tragwagen (48) in Verbindung bringbares Teil (45, 46) aufweisen.

9. Einrichtung nach Anspruch 8, dadurch gekennzeichnet, daß das mit dem Tragwagen (48) in Verbindung bringbare Teil der Meßeinheit (44) einen Kragarm (45) aufweist.

10. Einrichtung nach Anspruch 9, dadurch gekennzeichnet, daß am Ende des Kragarms (45) eine Rolle (46) angeordnet ist.

11. Einrichtung nach Anspruch 9 oder 10, dadurch gekennzeichnet, daß die Rolle (46) über einen Stoßdämpfer (55) mit Rückführeinrichtung (56) am Kragarm (45) gelagert ist, wobei die Rückführeinrichtung (56) die Rolle (46) in bezug auf den Kragarm (45) in eine Soll- oder Bezugslage bringt.

12. Einrichtung nach Anspruch 10 oder 11, dadurch gekennzeichnet, daß der Rolle (46) ein Magnet (59) zugeordnet ist.

13. Einrichtung nach Anspruch 12, dadurch gekennzeichnet, daß der Magnet (59) an einem um die Achse (54) der Rolle (46) schwenkbar gelagerten Hebel(57) gelagert und der Hebel (57) durch eine weitere Rolle (58) am Tragwagen (48) bzw. einem Rad (47) desselben abstützbar ist.

14. Einrichtung nach Anspruch 13, dadurch gekennzeichnet, daß das aus Rolle (46), Magnet (59), schwenkbarem Hebel (57) und weiterer Rolle gebildete Mitnehmerteil zur vertikalen Ebene (78) durch die Längsachse des Kragarms (45) symmetrisch aufgebaut ist.

15. Einrichtung nach einem der Ansprüche 6 bis 14, dadurch gekennzeichnet, daß die Meßeinheiten (44) ein in Querrichtung (y-Richtung) auf ein Teil (Innenfläche 97 eines Rades 47) des Transportwagens (48) ausrichtbares Entfernungsmeßgerät (95) aufweist.

16. Einrichtung nach Anspruch 15, dadurch gekennzeichnet, daß die Meßeinheiten (44) einen in Querrichtung auf die Innenfläche (97) des Radkranzes (98) eines Rades (47) des Transportwagens (48) ausrichtbaren Laser-Entfernungssensor (95) aufweist.

17. Einrichtung nach einem der Ansprüche 6 bis 16, dadurch gekennzeichnet, daß an beiden Enden der Meßstrecke (40) eine Vorrichtung (60, 63) vorgesehen ist, die geeignet ist, die Meßeinheiten (44) aus der Flucht der Meßstrecke (40) zurückzuziehen und in diese hineinzubewegen.

18. Einrichtung nach einem der Ansprüche 6 bis 17, dadurch gekennzeichnet, daß für den Rücktransport der Meßeinheiten (44) ein parallel zur Meßstrecke (40) vorgesehener Transportweg (65) vorgesehen ist.

19. Einrichtung nach Anspruch 18, dadurch gekennzeichnet, daß dem Transportweg (65) eine Antriebsanordnung (68) zugeordnet ist.

20. Einrichtung nach Anspruch 19, dadurch gekennzeichnet, daß die Antriebsanordnung ein Endlosband (68) mit Mitnehmerelementen (69) für die Meßeinheiten (44) aufweist.

21. Einrichtung nach Anspruch 20, dadurch gekennzeichnet, daß das Endlosband (68) aus nicht magnetesisierbarem Material und die Mitnehmerelemente (69) aus magnetisierbarem Material bestehen und die Meßeinheiten (44) Magnete (72) aufweisen, die im Bereich des Laufwegs der Mitnehmerelemente (69) liegen.

22. Einrichtung nach einem der Ansprüche 6 bis 21, dadurch gekennzeichnet, daß die Meßstrecke (40) einschließlich Meßeinheiten (44) und deren Transportsystem (43, 65, 60, 63, 68) zwischen den Schienen des Gleises (2) angeordnet ist.

23. Einrichtung nach einem der Ansprüche 6 bis 22, dadurch gekennzeichnet, daß die Meßeinrichtungen (75) als Laser-Entfernungssensoren ausgebildet sind, die um eine feststehende vertikale Achse (77) und um eine horizontale Achse (76) schwenkbar sind und integrierte Winkelsensoren aufweisen.

24. Einrichtung nach einem der Ansprüche 6 bis 23, dadurch gekennzeichnet, daß die Meßeinrichtungen (75) und die Steuerung der Fahrantriebe der Umschlag-Hebezeuge (18) mit einem zentralen Rechner verbunden sind.

25. Einrichtung nach einem der Ansprüche 6 bis 24, dadurch gekennzeichnet, daß das lagerinterne Transportsystem mindestens einen Querförderer (30, 31) mit plattenförmigen Transportelementen (32) aufweist und die Transportelemente (32) zumindest zeitweise eine definierte Lage einnehmen.

## Claims

1. Process for controlling the transference of goods load units (82) such as containers, interchangeable containers, semitrailers or similar from or onto a slowly moving train (6) made up of bogie waggons (48) by means of transfer hoists (18),
characterised
in that initially each bogie waggon (48) to be unloaded and/or loaded has a reference point (R) allocated to it, the position of said reference point, which is variable absolutely in space with time, being constantly measured in relation to a fixed measuring section (40);
that subsequently
- in the case where a goods load unit (82) is to be unloaded, the position of at least one load application point (81) of the goods load unit (82), said position being variable in the same way in the longitudinal direction of the rails, and
- in the case where a goods load unit (82) is to be loaded, the position of the take-up elements (93) of the bogie waggons (48) which is variable with time in the longitudinal direction of the rails,
are measured in relation to the fixed measuring section (40) and formed as path difference relative to the reference point (R);
that after that the common centre (85) of the load application points (81) or take-up elements (93) is determined in relation to the reference point (R), said common centre (85) of the load application points (81) or take-up elements (93) corresponding to the centre of the goods load unit (82) or the centre of the bogie waggon (48);
that the position of the centre (86) of the load-bearing points of the associated transfer hoist (18) is constantly measured in relation to the fixed measuring section (40, 41),
and the transfer hoist with its load-bearing centre (86) is brought onto the centre (85) of the load application points (81) or the take-up elements (93), in order to permit transference.

2. Process according to Claim 1, characterised in that the common centre (85) of the load application points (81) or the take-up elements (93) is determined by measurement of a further load application point (83) or a further take-up element.

3. Process according to Claim 1, characterised in that the common centre (85) of the load application points (81) of a goods load unit (82) is determined via previously known data of the goods load unit.

4. Process according to one of Claims 1 to 3, characterised in that the position of the load application points (81) and/or the take-up elements (93) are also determined with their components running across the longitudinal direction of the rails.

5. Process according to one of Claims 1 to 4, characterised in that the previously known data and measured positions of the goods load units (82), the bogie waggons (48) and the transfer hoists (18) are input into a computer, and the values to be determined are supplied by this, in particular for control of the transfer hoists (18).

6. Arrangement with a rail path comprising at least one track (2), a storage complex (1) with an internal transport system (30, 31) and transfer hoists (18), which take up the rail path (2) and the internal transport system (30, 31) of the storage complex, for implementing the process according to at least one of Claims 1 to 5, characterised in that an unloading zone and at least one loading zone (16, 17) are allocated to the rail path (2);
that parallel to the rail path (2) a measuring section (40) is located, to which measurement units (44) which may be carried along by the bogie waggons (48) are allocated for formation of a reference point (R); that in front of each loading or unloading zone (16 or 17) - as viewed in the direction of movement of the train (6) - a measuring device (75) is located which is suitable for determining the time-variable position of the load application points (81) of the goods load units (82) or the take-up elements (93) of the bogie waggons (48), relative to the measurement rail (40), and that the transfer hoists (18) are connected to a further measurement rail (41) allocated to the first via a respective measuring device (89).

7. Arrangement according to Claim 6, characterised in that a refitting zone (24) is provided between the loading zone (16 or 17) and the unloading zone (17 or 16).

8. Arrangement according to Claim 6 or 7, characterised in that the measurement units (44) allocated to the measuring section (40) has a part (45, 46), which may be connected to the respective bogie waggon (48), for formation of the reference point (R).

9. Arrangement according to Claim 8, characterised in that the part of the measurement unit (44) which may be connected to the bogie waggon (48) is constructed as a cantilever arm (45).

10. Arrangement according to Claim 9, characterised in that a roller (46) is arranged at the end of the cantilever arm (45).

11. Arrangement according to Claim 9 or 10, characterised in that the roller (46) is mounted on the cantilever arm (45) via a shock absorber (55) with a return means (56), said return means (56) bringing the roller (46) into a desired or reference position relative to the cantilever arm (45).

12. Arrangement according to Claim 10 or 11, characterised in that a magnet (59) is allocated to the roller (46).

13. Arrangement according to Claim 12, characterised in that the magnet (59) is mounted on a lever (57), which may be pivoted around the axis (54) of the roller (46), and the lever (57) may be supported on the bogie waggon (48) or a wheel (47) thereof by a further roller (58).

14. Arrangement according to Claim 13, characterised in that the driver part formed by the roller (46), magnet (59), pivoting lever (57) and additional roller is constructed symmetrically to the vertical plane (78) through the longitudinal axis of the cantilever arm (45).

15. Arrangement according to one of Claims 6 to 14, characterised in that the measurement units (44) have a distance measuring device (95) which may aligned onto one portion (inside surface 97 of a wheel 47) of the transport waggon (48) in transverse direction (y-direction).

16. Arrangement according to Claim 15, characterised in that the measurement units (44) have a laser distance sensor (95) which may be aligned onto the inside surface (97) of the wheel flange (98) of a wheel (47) of the transport waggon (48) in transverse direction.

17. Arrangement according to one of Claims 6 to 16, characterised in that a device (60, 63) is located at both ends of the measuring section (40) which is capable of withdrawing the measurement units (44) from the range of the measuring section (40) or moving it into this region.

18. Arrangement according to one of Claims 6 to 17, characterised in that for the return transport of the measurement units (44) a transport path (65) is provided parallel to the measuring section (40).

19. Arrangement according to Claim 18, characterised in that a drive arrangement (68) is allocated to the transport path (65).

20. Arrangement according to Claim 19, characterised in that the drive arrangement has a continuous belt (68) with driver elements (69) for the measurement units (44).

21. Arrangement according to Claim 20, characterised in that the continuous belt (68) is made from a non-magnetisable material and the driver elements (69) from magnetisable material, and the measurement units (44) have magnets (72) located in the region of the travel path of the driver elements (69).

22. Arrangement according to one of Claims 6 to 21, characterised in that the measuring section (40) including the measurement units (44) and their transport system (43, 65, 60, 63, 68) is arranged between the rails of the track (2).

23. Arrangement according to one of Claims 6 to 22, characterised in that the measuring devices (75) for are constructed as a laser distance sensors, which may be pivoted around a fixed vertical axis (77) and around a horizontal axis (76) and have integrated angle sensors.

24. Arrangement according to one of Claims 6 to 23, characterised in that the measurement units (75) and control means of the actuating drives of the transfer hoists (18) are connected to a central computer.

25. Arrangement according to one of Claims 6 to 24, characterised in that the internal transport system of the storage complex has at least one cross conveyor (30, 31) with plate-shaped transport elements (32), and the transport elements (32) at least intermittently assume a defined position.

## Revendications

1. Procédé de contrôle du transbordement d'unités de chargement (82), comme des conteneurs, des récipients recyclables, des fourgons de semi-remorques, ou similaires, au moyen d'engins de levage et de transbordement (18), depuis un train (6), ou sur un train (6), formé de wagons porteurs (48), et se déplaçant lentement,
caractérisé
en ce qu'au début, à chaque wagon porteur (48) à décharger ou à charger, est associé un point de référence (R), dont la position, variable dans le temps et, en absolu, dans l'espace, est mesurée en permanence par rapport à une piste de mesure (40) fixe,
en ce qu'ensuite, on mesure, par rapport à la piste de mesure (40) fixe,
- dans le cas d'une unité de chargement (82) à décharger, la position, variable de la même manière dans le sens longitudinal des rails, d'au moins un point de saisie de la charge (81) de l'unité de chargement (82), et
- dans le cas d'une unité de chargement (82) à charger, la position, variable dans le temps dans le sens longitudinal des rails, des organes de saisie (93) du wagon porteur (48),
et qu'on détermine cette position par la différence de course par rapport au point de référence (R),
en ce qu'on détermine ensuite, par rapport au point de référence (R), le centre commun (85) des points de saisie de la charge (81) ou des organes de saisie (93), étant entendu que le centre commun (85) des points de saisie de la charge (81) ou des organes de saisie (93) correspond au centre de l'unité de chargement (82) ou au centre du wagon porteur (48),
en ce qu'on mesure en continu, par rapport à la piste de mesure (40, 41) fixe, la position du centre (86) des points de saisie de l'engin de levage et de transbordement associé (18),
et l'engin de levage et de transbordement est placé, avec son centre (86) de saisie de la charge, au centre (85) des points de saisie de la charge (81) ou des organes de saisie (93),
pour permettre le transbordement.

2. Procédé suivant la revendication 1, caractérisé en ce que la détermination du centre commun (85) des points de saisie de la charge (81) ou des organes de saisie (93) se fait par la mesure d'un autre point de saisie de la charge (83) ou d'un autre organe de saisie.

3. Procédé suivant la revendication 1, caractérisé en ce que la détermination du centre commun (85) des points de saisie de la charge (81) d'une unité de chargement (82) se fait au moyen de données prédéfinies propres à l'unité de chargement.

4. Procédé suivant l'une des revendications 1 à 3, caractérisé en ce que la position des points de saisie de la charge (81) et/ou des organes de saisie (93) est déterminée également avec leur composante dirigée perpendiculairement à la direction longitudinale des rails.

5. Procédé suivant l'une des revendications 1 à 4, caractérisé en ce que les données prédéfinies et les positions mesurées des unités de chargement (82), des wagons porteurs (48) et des engins de levage et de transbordement (18) sont mises en mémoire dans un ordinateur, et les valeurs à déterminer, en particulier pour commander les engins de levage et de transbordement (18), sont fournies par celui-ci.

6. Dispositif comportant un chemin de rails constitué d'au moins une voie (2), un complexe de magasinage (1) avec son système de transport (30, 31) interne au magasin et ses engins de levage et de transbordement (18), qui couvrent la voie (2) et le système de transport (30, 31) interne au magasin, pour la mise en oeuvre du procédé suivant au moins l'une des revendications 1 à 5,
caractérisé
en ce qu'au chemin de rails (2), est associée au moins une zone de déchargement et au moins une zone de chargement (16, 17),
en ce que, parallèlement au chemin de rails (2), est disposée une piste de mesure (40) à laquelle sont associées des unités de mesure (44) pouvant être entraînées par les wagons porteurs (48), pour former un point de référence (R),
en ce que - en regardant suivant la direction de déplacement du train (6) - avant chaque zone de chargement et de déchargement (respectivement 16 et 17), il existe un dispositif de mesure (75) adapté à la détermination, par rapport au rail de mesure (40), de la position, variable dans le temps, des points respectifs de saisie de la charge (81) des unités de chargement (82) ou des organes de saisie (93) des wagons porteurs (48),
et en ce que les engins de levage et de transbordement (18) sont raccordés, par l'intermédiaire, chaque fois, d'un dispositif de mesure (89), à un autre rail de mesure (41) correspondant, associé au premier rail.

7. Dispositif suivant la revendication 6, caractérisé en ce qu'entre la zone de chargement (respectivement 16 ou 17) et la zone de déchargement (respectivement 17 ou 16), il est prévu une zone (24) de réajustement.

8. Dispositif suivant la revendication 6 ou la revendication 7, caractérisé en ce que les unités de mesure (44) associées à la piste de mesure (40) présentent, pour créer le point de référence (R), une pièce (45, 46) pouvant former une liaison avec chaque wagon porteur (48) concerné.

9. Dispositif suivant la revendication 8, caractérisé en ce que la pièce de l'unité de mesure (44) pouvant former la liaison avec le wagon porteur (48) présente un bras en porte-à-faux (45).

10. Dispositif suivant la revendication 9, caractérisé en ce qu'à l'extrémité du bras en porte-à-faux (45), est placé un galet (46).

11. Dispositif suivant la revendication 9 ou la revendication 10, caractérisé en ce que le galet (46) est monté sur le bras en porte-à-faux (45) par l'intermédiaire d'un amortisseur (55) avec dispositif de rappel (56), étant entendu que le dispositif de rappel (56) place le galet (46), par rapport au bras en porte-à-faux (45), dans une position de consigne ou une position de référence.

12. Dispositif suivant la revendication 10 ou la revendication 11, caractérisé en ce qu'au galet (46), est associé un aimant (59).

13. Dispositif suivant la revendication 12, caractérisé en ce que l'aimant (59) est monté sur un levier (57) monté de façon à pouvoir pivoter autour de l'axe (54) du galet (46), et que le levier (57) peut s'appuyer, par un autre galet (58), sur le wagon porteur (48) ou une roue (47) de celui-ci.

14. Dispositif suivant la revendication 13, caractérisé en ce que la pièce d'entraînement, formée par le galet (46), l'aimant (59), le levier pivotant (57) et l'autre galet, est construite symétrique par rapport au plan vertical (78) passant par l'axe longitudinal du bras en porte-à-faux (45).

15. Dispositif suivant l'une des revendications 6 à 14, caractérisé en ce que les unités de mesure (44) présentent un appareil de mesure de distance (95) que l'on peut diriger transversalement (dans la direction des y) sur une pièce (surface interne 97 d'une roue 47) du wagon porteur (48).

16. Dispositif suivant la revendication 15, caractérisé en ce que les unités de mesure (44) présentent un détecteur laser de distance (95) que l'on peut diriger transversalement sur la surface interne (97) du bandage (98) d'une roue (47) du wagon porteur (48).

17. Dispositif suivant l'une des revendications 6 à 16, caractérisé en ce qu'aux deux extrémités de la piste de mesure (40), il est prévu un dispositif (60, 63) approprié pour retirer de l'alignement de la piste de mesure (40) et mettre dans celui-ci les unités de mesure (44).

18. Dispositif suivant l'une des revendications 6 à 17, caractérisé en ce que, pour ramener en arrière les unités de mesure (44), il est prévu une piste de transport (65), prévue parallèle à la piste de mesure (40).

19. Dispositif suivant la revendication 18, caractérisé en ce qu'à la piste de transport (65), est associé un dispositif d'entraînement (68).

20. Dispositif suivant la revendication 19, caractérisé en ce que le dispositif d'entraînement présente une bande sans fin (68) comportant des organes d'entraînement (69) pour les unités de mesure (44).

21. Dispositif suivant la revendication 20, caractérisé en ce que la bande sans fin (68) est constituée de matériau non magnétisable et que les organes d'entraînement (69) sont constitués de matériau magnétisable, et que les unités de mesure (44) présentent des aimants (72), placés dans la zone de la trajectoire des organes d'entraînement (69).

22. Dispositif suivant l'une des revendications 6 à 21, caractérisé en ce que la piste de mesure (40), y compris les unités de mesure (44) et leur système de transport (43, 65, 60, 63, 68), est disposée entre les rails de la voie (2).

23. Dispositif suivant l'une des revendications 6 à 22, caractérisé en ce que les dispositifs de mesure (75) sont réalisés sous la forme de détecteurs laser de distance, qui peuvent pivoter autour d'un axe vertical fixe (77) et d'un axe horizontal (76) et présentent des détecteurs d'angle intégrés.

24. Dispositif suivant l'une des revendications 6 à 23, caractérisé en ce que les dispositifs de mesure (75) et la commande des moteurs de déplacement des engins de levage et de transbordement (18) sont reliés à un ordinateur central.

25. Dispositif suivant l'une des revendications 6 à 24, caractérisé en ce que le système de transport interne au magasin présente au moins un transporteur transversal (30, 31) comportant des organes de transport (32) en forme de plateaux et que les organes de transport (32) prennent, au moins à certains moments, une position définie.
